# DEMANDE DE BREVET EUROPEEN

(11) **EP 1 338 456 A1**
(43) Date de publication de la demande: **27.08.2003**
(21) Numéro de dépôt: 03360031.3
(22) Date de dépôt: 21.02.2003
(51) Int. Cl.: B60J 10/00, B60J 10/08

(54) **Joint profilé périmétrique pour rebord métallique s'étendant notamment dans l'encadrement d'un ouvrant de carrosserie automobile**

(30) Priorité: 26.02.2002 FR 0202432
(71) Demandeur: Rehau S.A., 57340 Morhange (FR)
(72) Inventeur: Perrin, Jean-Philippe, 57380 Faulquemont (FR)
(74) Mandataire: Metz, Paul

(57) **Abrégé**

Le joint profilé (1) comprend un bourrelet souple d'étanchéité (3) solidarisé à une partie d'accrochage (2) formant pince devant être chaussée sur le rebord métallique (7).

La partie d'accrochage se compose d'une matière plastique rigide formant sa structure de base, garnie d'une matière plastique de friction au niveau des zones de contact (22, 23) avec le retour métallique.

Sa section est constituée de deux branches (8, 9) de longueur différente, réunies en partie supérieure, s'étendant de manière non rectiligne tout en restant sensiblement parallèle. Elles délimitent entre elles un canal de réception (11) de largeur sensiblement constante et de profil en forme générale de S.

Cette invention intéresse notamment les fabricants et installateurs d'accessoires pour véhicules automobiles.

## Description

La présente invention concerne un joint profilé périmétrique destiné à être monté sur un rebord métallique s'étendant notamment dans l'encadrement d'un ouvrant de carrosserie automobile tel que par exemple un capot moteur, une portière, un coffre ou une vitre ouvrante non-coulissante.

Pour assurer la protection mécanique, l'étanchéité et une certaine insonorisation au niveau des encadrements dits « dormants » de carrosserie automobile, il est connu de garnir les rebords métalliques de ces encadrements par un joint périmétrique.

De façon classique, ces joints sont des profilés constitués d'une partie d'accrochage permettant la mise en place avec retenue du joint sur le rebord de tôle et d'un bourrelet souple d'étanchéité sur lequel vient s'appuyer l'ouvrant en position de fermeture afin de réaliser l'étanchéité et une certaine insonorisation.

Dans l'art antérieur, la partie d'accrochage présente une section en forme générale de U devant être chaussée avec un effet de pincement sur le rebord de tôle. Pour améliorer la retenue du joint sur le rebord de tôle, les faces intérieures en regard des deux branches de la partie d'accrochage en forme de U comportent habituellement des lèvres de retenue se faisant face.

La partie d'accrochage est réalisée en une matière relativement rigide, généralement en matière plastique rigide ou en caoutchouc dur. Pour améliorer sa rigidité, elle peut être renforcée par une armature centrale métallique dont de nombreux types ont été décrits dans l'art antérieur.

La demande FR 2.452.643 au nom de MESNEL ETABLISSEMENTS divulgue ainsi par exemple une armature constituée d'une plaque de métal conformée de manière appropriée et largement ajourée afin d'être plus facilement déformable, plus légère et plus économique.

Un autre exemple est donné par la demande FR 2.524.406 au nom de SAIAG SPA qui décrit une armature constituée d'un fil métallique replié en zigzag et lié par des fils textiles.

Le bourrelet d'étanchéité est un profilé tubulaire creux réalisé dans un matériau plus souple, habituellement en caoutchouc thermoplastique ou non, moussé ou cellulaire, qui permet un écrasement par compression de celui-ci. Il s'étend longitudinalement le long d'une des faces extérieures de la partie d'accrochage déterminée en fonction de l'inclinaison du rebord de carrosserie et de la position relative de l'ouvrant. Dans le cas par exemple d'un joint périmétrique de capot moteur, le bourrelet d'étanchéité est solidarisé à la face supérieure de la partie d'accrochage.

Ces deux parties constitutives du joint peuvent être réalisées simultanément par une opération de coextrusion ou être réalisées séparément puis assemblées par collage au cours d'une étape ultérieure.

Les joints d'étanchéité profilés de ce type sont largement connus et ont été décrits dans de nombreuses demandes de brevet, comme par exemple dans les demandes FR 2.629.128, EP 0.805.058, FR 2.502.563, EP 0.427.372, EP 0.300.736, WO 97/08003, EP 0.425.083, EP 1.123.827, EP 1.138.538, etc...

Les joints profilés connus présentent cependant de nombreux inconvénients.

Lorsque la partie d'accrochage est réalisée en caoutchouc rigide ou en matière plastique rigide, le joint a tendance à se désengager progressivement du retour de carrosserie car le pincement du métal par la matière dure des lèvres de retenue et des branches de la partie d'accrochage présente une retenue insuffisante.

La réalisation en caoutchouc armé est plus satisfaisante sur ce point car les lèvres en caoutchouc sont plus souples et améliorent ainsi la retenue. Cependant, pour être suffisamment rigide la partie d'accrochage doit être renforcée par une armature métallique qui augmente considérablement le prix de revient global de la pièce et complique sa fabrication.

En outre et ce quelle que soit la matière utilisée, il est difficile de réaliser par extrusion des formes de ce type, c'est-à-dire comportant des structures d'accrochage à lèvres se faisant face. En effet, l'extrusion doit s'effectuer en profil ouvert pour permettre le refroidissement du volume intérieur, les deux branches de la partie d'accrochage en U étant repliées au cours d'une étape suivante. Or, on constate qu'en cas de réchauffement, par exemple lors d'une montée en température ou à la température d'utilisation, les branches ont tendance à s'ouvrir pour revenir à leur forme initiale limitant ainsi l'effet de pincement recherché.

Ces inconvénients s'accompagnent d'une difficulté supplémentaire rencontrée lors du montage de ces joints antérieurs sur un rebord de carrosserie présentant, comme c'est souvent le cas, un changement de direction à faible rayon de courbure. Le joint classique à partie d'accrochage en matière plastique rigide se plie et même le joint armé a tendance à s'écraser et à perdre son aptitude à garder une forme suffisante pour assurer l'étanchéité.

De ce fait, l'installateur est souvent obligé de couper le joint à onglet au niveau de ce changement de direction, puis de raccorder les deux morceaux de part et d'autre de l'angle par exemple au moyen de liaisons d'entretoisement.

Le but de l'invention est de fournir un joint profilé périmétrique de structure similaire à ceux précédemment décrit, c'est-à-dire comportant une partie d'accrochage à section de forme générale en U et un bourrelet tubulaire souple d'étanchéité, mais ne présentant pas leurs inconvénients.

Pour cela, le joint selon l'invention comporte une partie d'accrochage de conception totalement nouvelle et inventive, à la fois dans sa composition et dans sa forme.

La partie d'accrochage selon l'invention est un profilé composite réalisé au moyen d'au moins deux matières plastiques différentes : une matière plastique rigide ou semi-rigide formant la structure de base et une matière plastique, de préférence plus souple, à propriété de friction élevée localisée au niveau d'au moins une zone destinée à être en contact avec le rebord métallique.

La section de cette partie d'accrochage est constituée de deux branches en regard l'une de l'autre, réunies au niveau de leur partie supérieure par une traverse sensiblement horizontale et délimitant entre elles un canal de réception pour la bordure de carrosserie à équiper.

Selon l'invention, les deux branches, préférentiellement de longueur différente, s'étendent globalement vers le bas en restant sensiblement parallèles, mais de façon non rectiligne contrairement à l'art antérieur.

Après un tronçon supérieur sensiblement vertical, elles s'inclinent à environ 45° par rapport à la verticale, puis reviennent vers le côté opposé avec un angle voisin de 90°. De préférence, la branche la plus longue se prolonge ensuite par une extrémité sensiblement verticale.

Le canal de réception défini entre ces branches présente ainsi une largeur sensiblement constante et un profil sensiblement en forme de S.

Selon une caractéristique essentielle de l'invention, les branches de la partie d'accrochage comportent chacune au moins un patin d'appui, réalisé en une matière plastique à propriété de friction élevée, disposé au niveau d'une zone destinée à se trouver en contact avec le rebord métallique.

Le joint selon l'invention est destiné à être monté sur une bordure de carrosserie pouvant être constituée par un retour de tôle dressé ou par la juxtaposition coplanaire d'au moins deux retours de tôle réunis par exemple par un soudage par points.

La forme particulière des branches permet d'engendrer un effet de serrage à la manière d'une pince. La retenue est de plus améliorée par un effet d'immobilisation par frottement en raison de la matière de friction utilisée au niveau des zones d'appui.

Ainsi, le joint profilé selon l'invention assure un excellent maintien même s'il est réalisé en matière plastique et s'il ne comporte pas de lèvres de retenue comme les joints de l'art antérieur.

La forme particulière du joint selon l'invention permet de le monter très facilement sur une bordure de carrosserie en engageant sa partie d'accrochage sur le chant, en le faisant légèrement pivoter et en l'enfonçant jusqu'à butée.

Avantageusement, le joint selon l'invention permet une prise de rayon avec un pliage assez faible. L'effet de serrage et d'immobilisation est même amplifié lors de la déformation en courbure nécessaire au niveau des changements de direction du rebord de carrosserie. De ce fait, il est possible d'utiliser un unique tronçon continu de joint profilé selon l'invention, même en cas de rebord non rectiligne présentant des zones de changement de direction à faible rayon de courbure. Les découpes puis raccordements problématiques du joint sont ainsi évités.

La structure de base de la partie d'accrochage étant réalisée en une matière plastique suffisamment rigide, la nécessité d'une armature métallique coûteuse est évitée.

La partie d'accrochage selon l'invention peut très facilement être réalisée par un procédé classique de bi-extrusion. En effet, elle ne comporte pas de formes ou de reliefs compliquant le procédé.

L'absence de lèvres d'accrochage en regard permet d'extruder la structure dans sa configuration d'utilisation, sans qu'un repliage ultérieur soit nécessaire. On évite ainsi toute déformation indésirable limitant l'effet de pincement.

Comme précédemment, le bourrelet d'étanchéité peut être réalisé simultanément par une opération de coextrusion ou être extrudé séparément puis assemblé par la suite.

De préférence le bourrelet d'étanchéité est également réalisé en matière plastique.

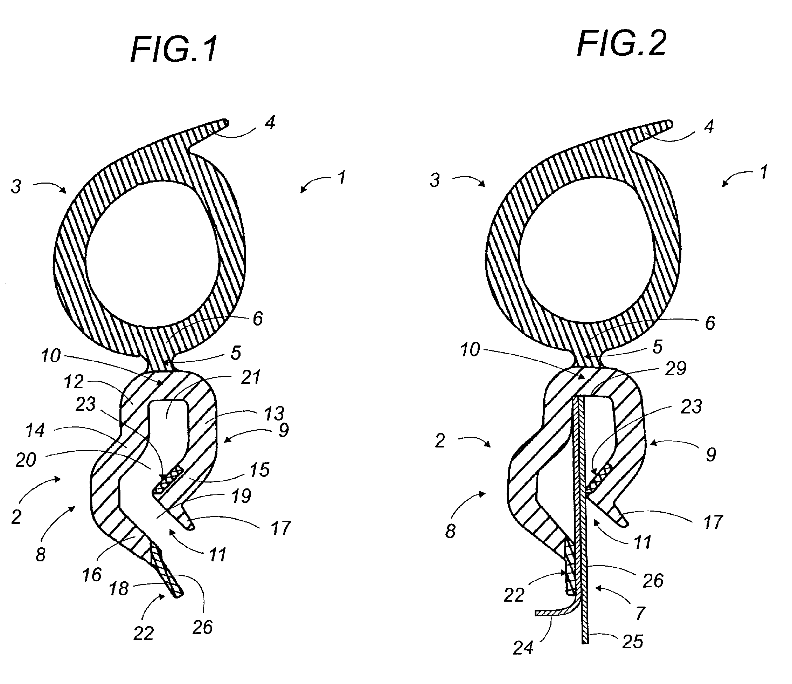

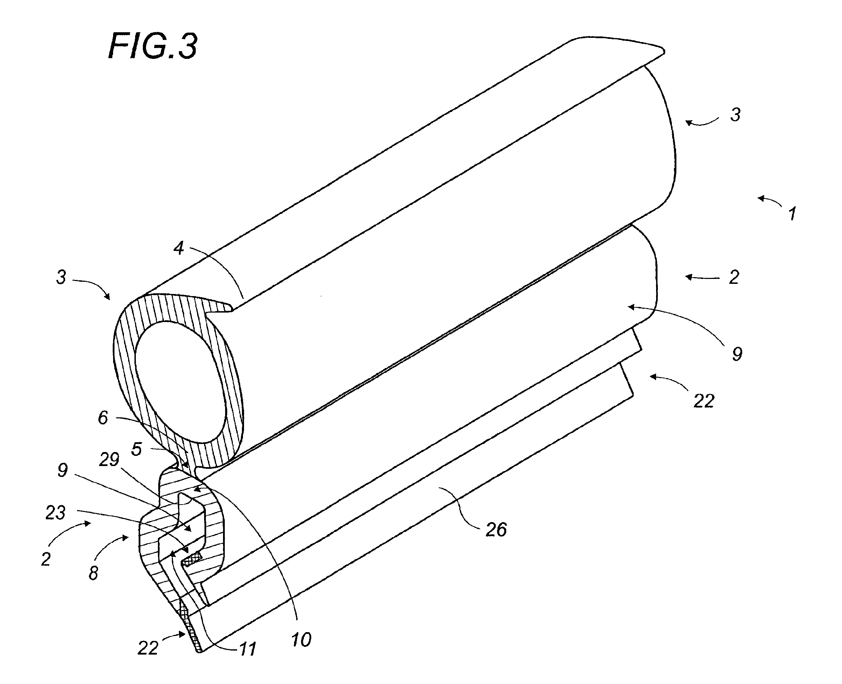

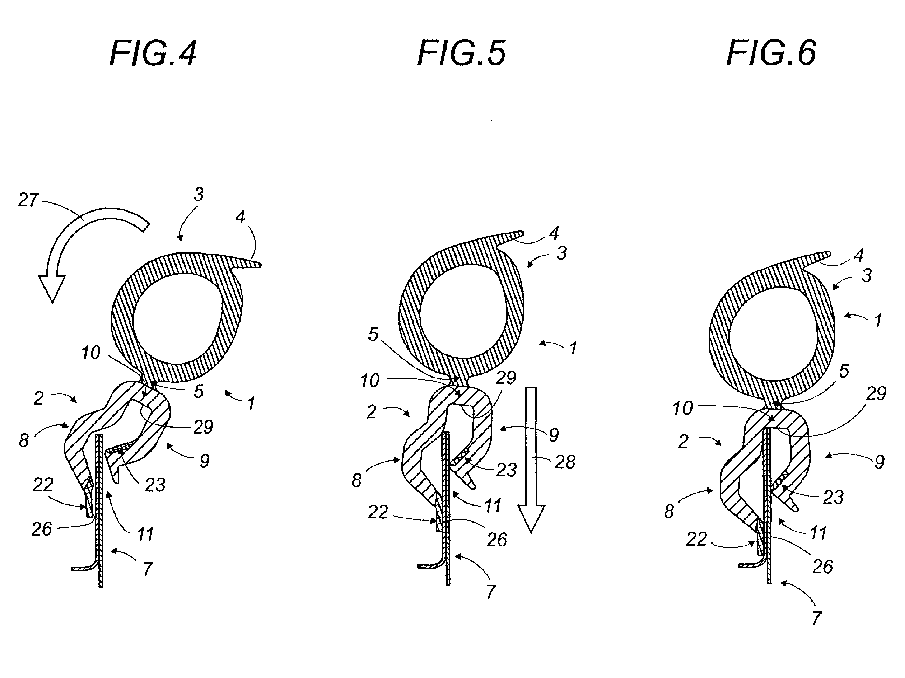

D'autres caractéristiques et avantages de l'invention apparaîtront à la lecture de la description détaillée qui va suivre, description faite en référence aux dessins annexés, dans lesquels :
. la figure 1 est une vue en coupe transversale d'un joint périmétrique selon l'invention à l'état libre ;
. la figure 2 est une vue en coupe transversale d'un joint périmétrique selon l'invention monté sur un retour de carrosserie ;
. la figure 3 est une vue en perspective du côté d'un tronçon de joint périmétrique selon l'invention à l'état libre ;
. les figures 4, 5 et 6 sont des vues en coupe transversales d'un joint périmétrique selon l'invention illustrant schématiquement les différentes étapes de montage (positionnement, chaussage et configuration finale) du joint selon l'invention sur un retour de carrosserie.

Le dispositif de joint selon la présente invention va maintenant être décrit de façon détaillée en référence aux figures 1 à 6. Les éléments équivalents représentés sur les différentes figures porteront les mêmes références numériques.

Sur les différentes figures, le joint profilé représenté correspond à un mode de réalisation particulier de l'invention destiné à un encadrement de capot moteur.

Il doit cependant être compris qu'il ne s'agit que d'un exemple préférentiel de réalisation de l'invention, l'homme du métier pouvant sans difficulté y apporter les modifications nécessaires pour l'adapter à d'autres applications sans sortir du cadre de la présente invention.

Sur les figures, on a représenté un joint profilé 1 selon l'invention. Ce joint 1 comprend une partie d'accrochage 2 sur laquelle est solidarisé un bourrelet d'étanchéité 3.

Le bourrelet d'étanchéité 3 est un profilé tubulaire creux réalisé dans un matériau relativement souple, ce qui lui permet de s'écraser lorsque la face intérieure du capot vient s'appuyer contre lui en position de fermeture et ainsi d'assurer une certaine étanchéité.

De manière préférentielle, le bourrelet 3 est réalisé en une matière plastique souple. Ainsi, le joint profilé 1 peut être entièrement composé de matières plastiques.

Le bourrelet 3 peut, par exemple, comporter une lèvre longitudinale 4 en partie supérieure, améliorant le contact avec la paroi du capot et renforçant ainsi l'étanchéité.

Dans ce mode de réalisation, le bourrelet d'étanchéité 3 s'étend longitudinalement au-dessus de la partie d'accrochage 2. Il est solidarisé à la partie d'accrochage 2 au moyen d'une unique nervure de fixation 5 qui réalise la jonction de préférence entre la partie inférieure 6 du bourrelet d'étanchéité 3 et la partie d'accrochage 2.

Cette configuration de la zone de jonction entre les deux parties, 2 et 3, constitutives du joint profilé est particulièrement avantageuse. En effet, elle évite au bourrelet 3 de venir se plier brutalement lors de la prise de rayons faibles ou d'angles sans coupe d'onglet. Dans de tels cas, le bourrelet peut légèrement pivoter en prenant un rayon plus grand que celui du rebord métallique et n'est pas contraint à se plier.

La partie d'accrochage 2 présente une section en forme générale de U devant être chaussée avec un effet de pincement sur un rebord 7 de tôle à équiper.

Sa structure de base est de préférence réalisée en une matière plastique rigide ou semi-rigide.

Elle comporte deux branches 8 et 9 en regard l'une de l'autre et s'étendant globalement vers le bas.

Ces branches 8 et 9 sont réunies au niveau de leur partie supérieure par une traverse 10 sensiblement horizontale et délimitent entre elles un canal de réception 11 pour la bordure 7 de carrosserie à équiper.

Selon l'invention, les deux branches 8 et 9 sont préférentiellement de longueur différente, la branche 8 étant plus longue que la branche 9.

Elles s'étendent globalement vers le bas en restant sensiblement parallèles, mais ne suivent pas une direction verticale.

De préférence, les branches 8 et 9 présentent successivement du haut vers le bas, un premier tronçon sensiblement vertical, respectivement 12 et 13, suivi d'un deuxième tronçon, respectivement 14 et 15, sensiblement incliné à environ 45° par rapport à la verticale, puis d'un troisième tronçon, respectivement 16 et 17, revenant vers le côté opposé avec un angle voisin de 90°.

De manière évidente, les angles formés à la jonction de ces différents tronçons peuvent être adoucis, arrondis ou tronqués de manière appropriée.

De préférence, la branche 8 la plus longue se prolonge ensuite par une extrémité 18 globalement verticale, mais présentant cependant une certaine inclinaison dirigée vers l'intérieur du canal de réception 11. L'épaisseur de cette extrémité 18 se rétrécit progressivement vers la pointe lui donnant une forme générale de « pied ».

De même, le tronçon 17 d'extrémité de la branche 9 se rétrécit progressivement vers la pointe et présente une forme similaire de « pied ».

D'un point de vue imagé, les branches 8 et 9 présentent ainsi une section de profil en forme générale de « jambes de danseuse ».

Le canal de réception 11 défini entre les branches 8 et 9 possède ainsi une largeur sensiblement constante et un profil sensiblement en forme de S. Il comporte trois tronçons successifs d'orientation différente, respectivement 19, 20 et 21 de l'entrée du canal de réception 11 à la traverse supérieure 10.

Selon une caractéristique essentielle de l'invention, les branches 8 et 9 comportent chacune au moins un patin d'appui, respectivement 22 et 23, réalisé en une matière plastique relativement souple à propriété de friction élevée.

Ces patins d'appui, formant sur le profilé des bandes de fiction, sont disposés au niveau des zones devant se retrouver en contact avec le retour 7 de carrosserie une fois le joint mis en place.

Sur l'exemple représenté, le patin 22 se confond entièrement avec le tronçon d'extrémité 18 de la branche 8. Le patin 23 garnit la paroi dirigée vers le canal de réception 11 du tronçon intermédiaire 15 de la branche 9, de préférence au niveau du « talon » du tronçon d'extrémité 17 en forme de « pied ».

Le joint selon l'invention est destiné à être monté sur une bordure 7 de carrosserie pouvant par exemple être formée, comme représenté sur la figure 2, par la juxtaposition coplanaire de deux retours de tôle 24 et 25.

Comme on peut le voir sur la figure 2, lorsque la partie d'accrochage 2 est engagée à chevauchement sur le rebord 7 de carrosserie, les branches 8 et 9 sont forcées en écartement au niveau de leurs extrémités afin de laisser un passage suffisant au rebord métallique correspondant à l'épaisseur de celui-ci. En réaction, elles exercent contre le rebord 7 une force opposée de pincement engendrant un effet de serrage.

La forme particulière des branches 8 et 9 provoque, lors de l'insertion du rebord métallique 7 dans le canal de réception 11, un pivotement de l'extrémité des branches 8 et 9 permettant leur écartement et conduisant ainsi à un contact serré des patins d'appui 22 et 23 contre les parois de tôle 24 et 25.

En particulier, le patin 22 se retrouve, après pivotement de l'extrémité 18 de la branche 8, plaqué verticalement contre le rebord métallique 7. Sa paroi interne 26 est en appui serré de friction contre la face latérale de la plaque de tôle 24.

Afin d'améliorer l'accrochage des patins 22 et 23 par un effet accru de frottement, leur surface d'appui peut éventuellement être pourvue de structures supplémentaires de retenue, par exemple sous la forme de reliefs.

Comme déjà mentionné dans la partie introductive de la présente demande, la forme particulière du joint selon l'invention permet un montage très facile de celui-ci sur une bordure de carrosserie. Les différentes phases de ce montage ont été représentées schématiquement sur les figures 4 à 6.

Pour mettre en place le joint profilé selon l'invention, il suffit au cours d'une première étape d'engager sa partie d'accrochage 2 sur le chant de la bordure 7 de carrosserie à équiper.

Pour cela, on place le joint profilé au-dessus de la bordure 7 de carrosserie, on l'incline légèrement de manière que le premier tronçon 19 du canal de réception 11 se trouve dans la même orientation que la bordure métallique 7, et on insère l'extrémité de la bordure 7 dans ce premier tronçon 19 du canal de réception 11. On se retrouve alors dans la configuration représentée sur la figure 4.

Au cours d'une deuxième étape, on fait pivoter le joint profilé selon l'invention dans le sens de la flèche 27, tout en insérant l'extrémité de la bordure métallique 7 dans le deuxième tronçon 20 du canal de réception 11. La présence du rebord 7 de carrosserie provoque l'écartement nécessaire des branches 8 et 9 de la partie d'accrochage 2. Cet écartement se fait automatiquement lors du pivotement du profilé sans que l'installateur n'ait à fournir de travail supplémentaire ou d'effort particulier. On se trouve alors dans la configuration de la figure 5.

Il suffit alors simplement, dans une dernière étape, de pousser le joint profilé vers le bas dans le sens de la flèche 28, afin d'enfoncer le rebord 7 de carrosserie dans le dernier tronçon 21 du canal de réception 11 jusqu'à ce que son chant arrive en butée contre la paroi inférieure 29 de la traverse supérieure 10. On se trouve alors dans la configuration finale de la figure 6.

Selon une variante préférentielle de l'invention, le joint profilé est réalisé entièrement en matières plastiques de différentes natures. Il peut ainsi être facilement fabriqué en une seule étape de co-extrusion.

Le joint profilé selon l'invention ne se limite pas à un joint d'étanchéité pour capot moteur. Il trouve une application dès qu'une bordure métallique doit être garnie par un joint profilé, par exemple dans l'encadrement d'un ouvrant de carrosserie automobile tel qu'un capot moteur, une portière, un coffre ou une vitre ouvrante non-coulissante.

Bien qu'il soit parfaitement adapté pour une utilisation dans le domaine automobile, le joint selon l'invention peut aussi être utilisé de manière avantageuse dans tout autre domaine.

## Revendications

1. Joint profilé (1), destiné à être monté sur un rebord métallique (7) s'étendant notamment dans l'encadrement d'un ouvrant de carrosserie automobile, comprenant une partie d'accrochage (2) à section en forme générale de U devant être chaussée avec un effet de pincement sur le rebord métallique et un bourrelet souple d'étanchéité (3) s'étendant longitudinalement le long d'une des faces extérieures de la partie d'accrochage, la partie d'accrochage (2) comportant deux branches (8, 9) en regard l'une de l'autre, réunies au niveau de leur partie supérieure par une traverse (10) sensiblement horizontale et délimitant entre elles un canal de réception (11) pour le rebord métallique (7), **caractérisé en ce que** la partie d'accrochage (2) est un profilé composite réalisé au moyen d'au moins deux matières plastiques différentes, une matière plastique rigide ou semi-rigide formant la structure de base et une matière plastique à propriété de friction élevée (22, 23) localisée au niveau d'au moins une zone destinée à être en contact avec le rebord métallique (7).

2. Joint profilé selon la revendication précédente **caractérisé en ce que** les deux branches (8, 9) de la partie d'accrochage (2) s'étendent globalement vers le bas en restant sensiblement parallèles, mais de façon non rectiligne.

3. Joint profilé selon la revendication précédente **caractérisé en ce que** les branches (8, 9) de la partie d'accrochage (2) présentent successivement du haut vers le bas, un premier tronçon (12, 13) sensiblement vertical, suivi d'un deuxième tronçon (14, 15) sensiblement incliné à environ 45° par rapport à la verticale, puis d'un troisième tronçon (16, 17) revenant vers le côté opposé avec un angle voisin de 90°.

4. Joint profilé selon l'une quelconque des revendications précédentes **caractérisé en ce que** les deux branches (8, 9) de la partie d'accrochage (2) sont de longueur différente.

5. Joint profilé selon la revendication précédente **caractérisé en ce que** la branche la plus longue (8) se prolonge par une extrémité (18) globalement verticale, mais présentant une certaine inclinaison dirigée vers l'intérieur du canal de réception (11).

6. Joint profilé selon l'une quelconque des revendications précédentes **caractérisé en ce que** le tronçon d'extrémité (17, 18) d'au moins une des branches (8, 9) de la partie d'accrochage (2) se rétrécit progressivement vers la pointe et présente une forme générale de « pied ».

7. Joint profilé selon l'une quelconque des revendications précédentes **caractérisé en ce que** le canal de réception (11) défini entre les branches (8, 9) de la partie d'accrochage (2) présente une largeur sensiblement constante et un profil sensiblement en forme de S.

8. Joint profilé selon l'une quelconque des revendications précédentes **caractérisé en ce que** le canal de réception (11) comporte trois tronçons successifs (19, 20, 21) d'orientation différente.

9. Joint profilé selon l'une quelconque des revendications précédentes **caractérisé en ce que** les branches (8, 9) de la partie d'accrochage (2) comportent chacune au moins un patin d'appui (22, 23), réalisé en une matière plastique à propriété de friction élevée, disposé au niveau d'une zone destinée à se trouver en contact avec le rebord métallique (7).

10. Joint profilé selon la revendication précédente **caractérisé en ce qu'**au moins un patin (22) de l'une des branches (8) de la partie d'accrochage (2) se confond entièrement avec son tronçon d'extrémité (18).

11. Joint profilé selon la revendication précédente **caractérisé en ce que** ce patin (22) se retrouve plaqué verticalement contre le rebord métallique (7), après pivotement de l'extrémité (18) de la branche (8) lors de la mise en place du joint (1) sur le rebord métallique (7).

12. Joint profilé selon la revendication 9 **caractérisé en ce qu'**au moins un patin (23) de l'une des branches (9) de la partie d'accrochage (2) garnit la paroi dirigée vers le canal de réception (11) du tronçon intermédiaire (15) de la branche (9).

13. Joint profilé selon l'une quelconque des revendications 9 à 12 **caractérisé en ce que** la surface d'appui (26) d'au moins un des patins (22, 23) est pourvue de structures supplémentaires de retenue, par exemple sous la forme de reliefs.

14. Joint profilé selon l'une quelconque des revendications précédentes **caractérisé en ce que** le bourrelet d'étanchéité (3) est relié à la partie d'accrochage (2) au moyen d'une unique nervure de fixation (5).

15. Joint profilé selon l'une quelconque des revendications précédentes **caractérisé en ce que** le bourrelet d'étanchéité (3) comporte une lèvre longitudinale (4) en partie supérieure.

16. Joint profilé selon l'une quelconque des revendications précédentes **caractérisé en ce que** le bourrelet d'étanchéité (3) est réalisé en une matière plastique souple.

17. Joint profilé selon la revendication précédente **caractérisé en ce qu'**il est réalisé entièrement en matières plastiques de différentes natures.

18. Joint profilé selon l'une quelconque des revendications précédentes **caractérisé en ce qu'**il est fabriqué en une seule étape de co-extrusion.

19. Joint profilé selon l'une quelconque des revendications précédentes **caractérisé en ce qu'**il est destiné à un encadrement de capot moteur.
